# EUROPÄISCHE PATENTSCHRIFT

(11) **EP 3 111 122 B1**
(45) Veröffentlichungstag und Bekanntmachung des Hinweises auf die Patenterteilung: **14.08.2019**
(21) Anmeldenummer: 15704982.6
(22) Anmeldetag: 09.02.2015
(51) Int. Cl.: F16K 27/02, F02M 26/12, F02B 37/18, F02M 26/11, F02M 26/52, F02M 26/54, F02M 26/65, F02M 26/67

(54) **ANORDNUNG ZUR BEFESTIGUNG EINES REGELVENTILS AN EINEM STRÖMUNGSKANALGEHÄUSE EINES VERBRENNUNGSMOTORS**
ASSEMBLY FOR FASTENING A REGULATING VALVE TO A FLOW CHANNEL HOUSING OF AN INTERNAL COMBUSTION ENGINE
AGENCEMENT POUR FIXER UNE VANNE DE RÉGLULATION SUR UN CONDUIT D'UN MOTEUR À COMBUSTION INTERNE

(30) Priorität: 26.02.2014 DE 102014102524
(43) Veröffentlichungstag der Anmeldung: 04.01.2017
(73) Patentinhaber: Pierburg GmbH, 41460 Neuss (DE)
(72) Erfinder: SIMONS, Norbert, 40233 Düsseldorf (DE)
(74) Vertreter: Patentanwälte ter Smitten Eberlein-Van Hoof Rütten Partnerschaftsgesellschaft mbB
(86) Internationale Anmeldenummer: PCT/EP2015/052600
(87) Internationale Veröffentlichungsnummer: WO 2015/128175

(56) Entgegenhaltungen:
- EP-A1- 1 394 399
- WO-A1-01/48370
- DE-A1- 10 344 218
- DE-A1-102007 000 217
- DE-A1-102009 050 182
- DE-A1-102012 004 937
- FR-A6- 2 041 950
- JP-A- H07 224 963
- US-A- 4 630 445
- US-A- 5 746 058
- "Common Rail Diesel", , Oktober 2010 (2010-10), XP055185705, Gefunden im Internet: URL:http://www.hella.com/hella-at/assets/m edia/VDO_Diesel_Common_Rail.pdf [gefunden am 2015-04-24]

## Beschreibung

Die Erfindung betrifft eine Anordnung zur Befestigung eines Regelventils an einem Strömungskanalgehäuse eines Verbrennungsmotors mit einem Einsteckgehäuseteil, welches in ein Strömungskanalgehäuse ragt, einem Aktorgehäuse, in dem ein Aktor angeordnet ist und einer Gehäuseplatte, die auf dem Strömungskanalgehäuse aufliegt und von der aus sich zu einer ersten Seite das Einsteckgehäuseteil und zur gegenüberliegenden Seite das Aktorgehäuse erstreckt.

Derartige Regelventile werden beispielsweise als Abgasrückführventile, Abgasklappen oder Waste-Gateventile in Verbrennungsmotoren verwendet. Es kann sich dabei entweder um sogenannte Steckventile, an deren in das Strömungskanalgehäuse zu steckende Gehäuseteil, ein oder mehrere Ein- und Auslässe sowie ein oder mehrere zwischen diesen angeordnete Ventilsitze ausgebildet sind, handeln oder Ventile deren Gehäuse lediglich einen zylindrischen Einsteckteil aufweist, aus dem der Regelkörper heraus in den zu beherrschenden Kanal ragt. Der vom Ventilsitz umgebene Durchlass wird von diesem Regelkörper, insbesondere einem Ventilteller beherrscht, der an einer Ventilstange ausgebildet ist, die über ein Getriebe beispielsweise von einem Elektromotor betätigt wird, um die Fluidmenge zwischen Einlass und Auslass zu regeln, so dass das Getriebe mit dem Elektromotor den Aktor des Regelventils bildet.

Die Befestigung dieser Regelventile am Strömungskanalgehäuse erfolgt üblicherweise über einen Flansch, der ein Lochbild aufweist, welches dem Lochbild am Strömungskanalgehäuse entspricht, so dass das Ventil mittels Schrauben am Strömungskanalgehäuse befestigt werden kann. Dieser Flansch wird üblicherweise einstückig mit dem einzusteckenden Gehäuseteil sowie zumindest einem Teil des Aktorgehäuses des Ventils ausgebildet.

Ein derartiges Regelventil für Verbrennungsmotoren, welches im vorliegenden Ausführungsbeispiel als Steckventil ausgeführt ist, ist aus der DE 10 2012 104 612 A1 bekannt. Dieses Regelventil weist einen axialen Einlass sowie einen radialen Auslass auf, die am Einsteckgehäuseteil ausgebildet sind. Das Einsteckgehäuse ist einstückig mit einem das Getriebe zumindest zweiseitig umgebenden Aktorgehäuseteil ausgebildet, wobei zwischen dem Aktorgehäuseteil und dem Einsteckgehäuseteil eine Flanschplatte angeordnet ist, die einstückig mit diesen, insbesondere im Druckguss aus Leichtmetall hergestellt wird. An der Flanschplatte ist das zum Anschlussflansch des Strömungskanalgehäuses passende Schraubenlochmuster ausgebildet, so dass das Regelventil durch Schrauben üblicherweise unter Zwischenlage einer Dichtung am Strömungskanalgehäuse befestigt wird.

Ein weiteres Einsteckventil ist aus der EP 1 394 399 A1 bekannt. Dieses weist einen elektromagnetischen Aktor auf, dessen unteres Rückschlussblech gleichzeitig als Flansch zur Befestigung an einem Strömungsgehäuse dient.

Nachteilig an diesen Ausführungen ist, dass für jeden neuen Kunden, der ein anderes Bohrungslochmuster hat, das gesamte Druckgussgehäuse neu angepasst werden muss, so dass für jeden Kunden unabhängig von der Stückzahl immer neue Formen zur Herstellung des Ventilgehäuses notwendig sind.

Des Weiteren ist aus der DE 10 2012 004 937 A1 ein Scheibenventil in einer Zwischenflanschausführung bekannt, bei dem das aufeinandergesetzte Kanalgehäuse zusätzlich von zwei gegeneinander anliegenden Flanschen umgeben ist.

Auch ist aus der JP H07 224963 A ein Elektromagnetventil bekannt, welches mittels eines Überwurfflansches am Strömungsgehäuse befestigt werden kann.

Es stellt sich daher die Aufgabe, eine Anordnung zur Befestigung eines Regelventils an einem Strömungskanalgehäuse eines Verbrennungsmotors zu schaffen, bei welcher auch für unterschiedliche Anschlussbohrungsmuster immer das gleiche Ventilgehäuse verwendet werden kann. Die Herstellung und die Montage sollen möglichst einfach und kostengünstig durchführbar sein und eine ausreichende Dichtigkeit nach außen sichergestellt werden.

Diese Aufgabe wird durch eine Anordnung zur Befestigung eines Regelventils an einem Strömungskanalgehäuse eines Verbrennungsmotors mit den Merkmalen des Hauptanspruchs 1 gelöst.

Dadurch, dass die Gehäuseplatte von einem Überwurfflansch radial umgeben ist, an dem ein Schraubenlochmuster ausgebildet ist, welches einem Anschlussbohrungsmuster des Strömungskanalgehäuses entspricht, wobei das Regelventil über Schrauben, die durch die Durchgangslöcher des Überwurfflansches gesteckt sind, am Strömungskanalgehäuse befestigt ist, wobei die Gehäuseplatte, das Einsteckgehäuseteil und ein sich von der Gehäuseplatte erstreckendes Aktorgehäuseteil ein Leichtmetallgussteil ist, und wobei der Umfang des sich von der Gehäuseplatte erstreckenden Aktorgehäuseteils kleiner ist als der Innenumfang des Überwurfflansches, kann das Regelventil als Standardbauteil unabhängig vom Anschlussbohrungsmuster des Strömungskanalgehäuses hergestellt werden. Lediglich der separat hergestellte Überwurfflansch ist anzupassen. So können Herstellkosten eingespart werden, während die Montage einfach bleibt und eine sichere Abdichtung nach außen gewährleistet werden kann. Durch die Einstückigkeit der Gehäuseteile werden zusätzlich Montagekosten verringert. Die Verwendung eines Leichtmetalls für den Guss ermöglicht die Verwendung in thermisch hoch belasteten Bereichen. Der Überwurfflansch lässt sich einfach von der Seite des Aktorgehäuseteils aus über die Grundplatte schieben, so dass die Montage vereinfacht wird.

Dabei weist ein zum Strömungskanalgehäuse weisender axialer Abschnitt des Überwurfflansches einen Innenumfang auf, der im Wesentlichen dem Außenumfang der Gehäuseplatte entspricht. Entsprechend wird die Grundplatte vollständig radial anliegend vom Überwurfflansch umgeben. Ein Verschieben des Ventilgehäuses wird so zuverlässig durch Formschluss in radialer Richtung vermieden.

Zusätzlich weist ein vom Strömungskanalgehäuse weg weisender axialer Abschnitt des Überwurfflansches einen geringeren Innenumfang auf als der zum Strömungskanalgehäuse weisende axiale Abschnitt, wobei der vom Strömungskanalgehäuse weg weisende axiale Abschnitt axial gegen die Gehäuseplatte anliegt. So wird eine axiale Bewegung des Ventilgehäuses in der Öffnung des Strömungskanalgehäuses vermieden. Es wird eine vollständige relative Fixierung zwischen dem Überwurfflansch und der Grundplatte und damit dem Ventilgehäuse erreicht.

Insbesondere weist der zum Strömungskanalgehäuse weisende axiale Abschnitt eine geringere axiale Höhe auf als die Gehäuseplatte. Auf diese Weise wird sichergestellt, dass beim Festziehen der Schrauben der vom Strömungskanalgehäuse weg weisende axiale Abschnitt gespannt gegen die Grundplatte anliegt und somit auch geringfügige Bewegungen in axialer Richtung ausgeschlossen werden. Auch werden durch dieses Festklemmen der Grundplatte am Strömungskanalgehäuse radiale Bewegungen vermieden.

In einer bevorzugten Ausbildung ist zwischen dem Strömungskanalgehäuse und der Gehäuseplatte eine Dichtung angeordnet, welche durch die Befestigung des Regelventils mittels der durch die Durchgangslöcher des Überwurfflansches gesteckten Schrauben elastisch verformt ist. Hierdurch wird einerseits die verspannend wirkende Kraft durch die Verschraubung des Überwurfflansches erhöht und andererseits eine vollständige Dichtheit vom Strömungskanalgehäuse nach außen und umgekehrt sichergestellt.

In einer hierzu weiterführenden Ausführungsform ist die Dichtung eine Blechsickendichtung, wodurch ein Einsatz auch in thermisch hoch belasteten Bereichen möglich ist. Andererseits wird durch die Verwendung von Blechsickendichtungen auch eine sehr gute Dichtwirkung erzielt.

In einer weiteren bevorzugten Ausbildung der Erfindung sind die Durchgangslöcher im Überwurfflansch an Anschraubdomen ausgebildet, deren zum Strömungskanalgehäuse weisende axiale Höhe gemessen ab dem axialen Ende der Gehäuseplatte geringfügig kleiner ist als die Summe der axialen Höhe der Gehäuseplatte und der Dichtung. So wird eine ausreichende Verspannung des Überwurfflansches zur Grundplatte sichergestellt. Die Verspannung erfolgt jedoch nur über die Anschraubpunkte, so dass Toleranzprobleme insbesondere durch einen Verzug des Flansches durch das Anschrauben vermieden werden.

Vorzugsweise ist die axiale Höhe der Anschraubdome größer als die axiale Höhe des übrigen Umfangs des Überwurfflansches. Die Verspannung erfolgt so nur über die Anschraubpunkte, so dass Toleranzprobleme zur Grundplatte insbesondere durch einen Verzug des Flansches durch das Anschrauben vermieden werden.

Um die Befestigung des Regelventils am Strömungskanalgehäuse zusätzlich zu vereinfachen, ist der Überwurfflansch gegen ein Lösen gesichert an der Gehäuseplatte befestigt, so dass das Regelventil in die Öffnung mit dem Flansch eingelassen werden kann. Eine solche Sicherung kann mechanisch durch Schrauben oder Nieten oder stoffschlüssig durch Schweißen erfolgen.

Zur kostengünstigen Herstellung ist der Überwurfflansch ein Druckguss-, Stanz-, Stanzbiege- oder Prägeteil. Diese Teile können mit hoher Genauigkeit hergestellt werden und weisen eine ausreichende Festigkeit auf.

In einer weiteren bevorzugten Ausführung sind am Einsteckgehäuseteil ein Einlass und ein Auslass ausgebildet, wobei ein Regelkörper einen Durchlass zwischen dem Einlass und dem Auslass beherrscht, der über den Aktor in Bewegung versetzbar ist. Ein solches Steckventil ist besonders einfach zu fertigen und einzubauen, da das gesamte Ventil am Ventilsitz vor dem Einlassen in das Strömungskanalgehäuse vormontiert werden kann.

Es wird somit eine Anordnung zur Befestigung eines Regelventils an einem Strömungskanalgehäuse eines Verbrennungsmotors geschaffen, die bei einfacher und kostengünstiger Herstellung eine zuverlässige und dichte Befestigung des Regelventils für verschiedene Anschlussbohrungsmuster am Strömungskanalgehäuse und somit für unterschiedliche Kundenwünsche gewährleistet. Entsprechend kann das Gehäuse des Regelventils als Standardbauteil für verschiedene Anwendungen genutzt werden, ohne dass Modifikationen notwendig wären.

Ein Ausführungsbeispiel einer erfindungsgemäßen Anordnung zur Befestigung eines Regelventils an einem Strömungskanalgehäuse eines Verbrennungsmotors ist in den Figuren dargestellt und wird anhand der Befestigung eines Abgasrückführventils nachfolgend beschrieben.
Figur 1 zeigt eine Seitenansicht einer erfindungsgemäßen Anordnung zur Befestigung eines anderen Regelventils an einem Strömungskanalgehäuse in geschnittener Darstellung.
Figur 2 zeigt ein Gehäuse eines Regelventils mit einem Überwurfflansch in perspektivischer gesprengter Darstellung.

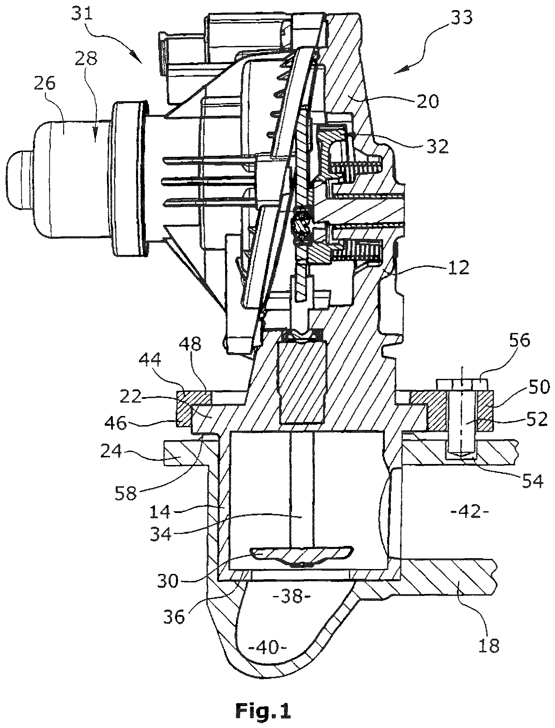

Das in der Figur 1 dargestellte, als Steckventil ausgebildete Regelventil weist ein einstückiges Ventilgehäuse 12 auf, welches aus einem Leichtmetall im Druckgussverfahren hergestellt ist, jedoch bei niedrigen Gastemperaturen auch aus Kunststoff hegestellt sein kann. Es besteht aus einem Einsteckgehäuseteil 14, welches in einen Strömungskanal ragt, der von einem Strömungskanalgehäuse 18 begrenzt wird, sowie einem Aktorgehäuseteil 20, welches außerhalb des Strömungskanalgehäuses 18 angeordnet ist. Zwischen dem Aktorgehäuseteil 20 und dem Einsteckgehäuseteil 14 weist das Ventilgehäuse 12 eine einstückig mit dem Aktorgehäuseteil 20 und dem Einsteckgehäuseteil 14 ausgebildete Gehäuseplatte 22 auf, mit der das Ventilgehäuse 12 auf einem Anschlussflansch 24 des Strömungskanalgehäuses 18 aufliegt.

Am Aktorgehäuseteil 20 ist ein Elektromotorgehäuse 26 zur Aufnahme eines Elektromotors 28 befestigt, der zum Antrieb eines Regelkörpers 30 dient. Das Aktorgehäuseteil 20 bildet gemeinsam mit dem Elektromotorgehäuse 26 ein Aktorgehäuse 31 des Regelventils. Der Antrieb des Regelventils erfolgt durch Bestromung des Elektromotors 28, der mit einem nachgeschalteten Getriebe 32 einen Aktor 33 bildet. Die entstehende Drehung einer nicht dargestellten Motorwelle wird durch das Getriebe 32, welches ebenfalls im Aktorgehäuse 31 angeordnet ist, in eine translatorische Bewegung einer Ventilstange 34 umgewandelt, an deren Ende der Regelkörper 30 befestigt ist.

Der Regelkörper 30 beherrscht einen von einem Ventilsitz 36 umgebenen Strömungsdurchlass 38, der zwischen einem Einlass 40, der in das Einsteckgehäuseteil 14 führt und einem Auslass 42, der aus dem Einsteckgehäuseteil 14 in den weiterführenden Strömungskanal führt, ausgebildet ist, so dass eine Strömungsverbindung zwischen dem Einlass 40 und dem Auslass 42 bei Aufliegen des Regelkörpers 30 auf dem Ventilsitz 36 unterbrochen wird und durch Abheben des Regelkörpers 30 vom Ventilsitz 36 freigegeben wird.

Die Befestigung des Regelventils beziehungsweise des Ventilgehäuses 12 erfolgt erfindungsgemäß mittels eines Überwurfflansches 44. Dieser Überwurfflansch 44 weist einen ersten zur Anschlussflanschfläche 24 des Strömungskanalgehäuses 18 weisenden axialen Abschnitt 46 und einen sich daran anschließenden zweiten axialen Abschnitt 48 auf, der vom Anschlussflansch 24 abgewandt angeordnet ist. Der Innenumfang des ersten axialen Abschnitts 46 entspricht im Wesentlichen dem Außenumfang der Gehäuseplatte 22. Es kann beispielsweise eine Spielpassung zwischen diesen Bauteilen 22, 46 vorgesehen werden. Der Innenumfang des zweiten axialen Abschnitts 48 ist kleiner als der der Gehäuseplatte 22, so dass ein radial innenliegender Bereich des zweiten axialen Abschnitts 48 des Überwurfflansches 44 von der zum Strömungskanalgehäuse 18 entgegengesetzten Seite gegen die Gehäuseplatte 22 anliegt. Der äußere Umfang der beiden axialen Abschnitte 46, 48 ist im vorliegenden Ausführungsbeispiel gleich.

Am Überwurfflansch 44 sind Anschraubdome 50 ausgebildet, welche Durchgangslöcher 52 aufweisen. Das Schraubenlochmuster 53 dieser Durchgangslöcher 52 entspricht einem Anschlussbohrungsmuster, welches durch Gewindebohrungen 54 im Anschlussflansch 24 des Strömungskanalgehäuses 18 gebildet wird. Entsprechend kann die Gehäuseplatte 22 und damit das Ventilgehäuse 12 nach dem Einstecken des Ventilgehäuses 12 in das Strömungskanalgehäuse 18 mittels des Überwurfflansches 44 durch Schrauben 56 am Anschlussflansch 24 des Strömungskanalgehäuses 18 befestigt werden. Der Außendurchmesser des Überwurfflansches 44 ist selbstverständlich an den Anschlussflansch 24 des Strömungskanalgehäuses 18 anzupassen, um ein zu dem jeweiligen Anschlussbohrungsmuster korrespondierendes Schraubenlochmuster 53 herstellen zu können.

Um sicher zu stellen, dass diese Befestigung eine Bewegung des Ventilgehäuses 12 relativ zum Strömungskanalgehäuse 18 vollständig verhindert und eine zuverlässige Abdichtung des Strömungskanals nach außen stattfindet, ist zwischen dem Anschlussflansch 24 und der Gehäuseplatte 22 eine elastische Dichtung in Form einer Blechsickendichtung 58 angeordnet, die beim Verschrauben der Schrauben 56 verspannt wird. Diese Verspannung in axialer Richtung wird dadurch erreicht, dass die Höhe des ersten axialen Abschnitts 46 des Überwurfflansches 44 und der Anschraubdome 50 zumindest geringfügig kleiner ist als die Summe der Höhe der Gehäuseplatte 22 und der Dicke der Blechsickendichtung 58 im vollständig verpressten Zustand oder geringfügig kleiner ist als die Höhe der Gehäuseplatte 22. Zusätzlich ist die Höhe der Anschlussdome 50 etwas größer als die Höhe des übrigen Überwurfflansches 44, wodurch die Krafteinleitung bei der Verpressung zur Vermeidung von Toleranzproblemen größtenteils über die Anschraubpunkte erfolgt. Somit wird eine axiale Bewegung durch die Verschraubung vermieden und eine radiale Bewegung durch die seitliche Anlage der Gehäuseplatte 22 am befestigten Überwurfflansch 44 vermieden.

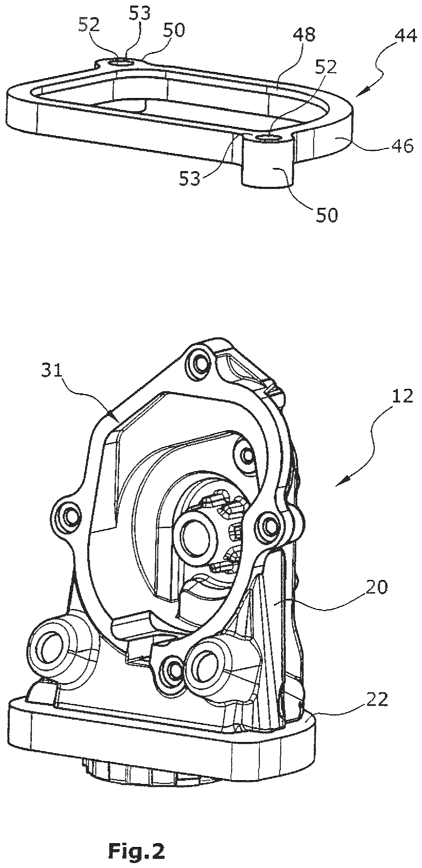

In Figur 2 ist zu erkennen, dass die Ausführung des Ventilgehäuses 12 auch so erfolgen kann, dass das Einsteckgehäuseteil 14 des Ventilgehäuses 12 lediglich kurz ausgeführt wird, so dass das Regelventil einen im Strömungskanalgehäuse 18 ausgebildeten Ventilsitz 36 beherrscht und das Einsteckgehäuseteil 14 lediglich eine Öffnung im Strömungskanalgehäuse 18 radial weitestgehend verschließt. Zusätzlich ist in Figur 2 zu erkennen, dass der Überwurfflansch 44 vorzugsweise vor dem Anbau des Elektromotorgehäuses 26 auf von oben über das Aktorgehäuseteil 20 des Ventilgehäuses 12 auf die Gehäuseplatte 22 aufgesetzt wird. Hier kann der Überwurfflansch 44 auch zur Vereinfachung des Transports vorab beispielsweise durch Schweißpunkte befestigt werden. Erst im Folgenden wird dann der Elektromotor 28 mit dem Getriebe 32 sowie das Elektromotorgehäuse 26 und die Ventilstange 34 mit dem Regelkörper 30 montiert. Anschließend wird das fertig zusammengebaute Regelventil einschließlich des Überwurfflansches 44 mit dem Einsteckgehäuseteil 14 in das Strömungskanalgehäuse 18 eingeschoben und über die Schrauben 56 an diesem befestigt.

Durch die Verwendung einer solchen erfindungsgemäßen Anordnung mit einem derartigen Überwurfflansch zur Befestigung eines Regelventils an einem Strömungskanalgehäuse kann bei unterschiedlichen Anschlussbohrungsmustern der Strömungskanalgehäuse beispielsweise bei unterschiedlichen Kundenwünschen ein standardisiertes Ventilgehäuse verwendet werden, wodurch gleiche Gussformen, Zeichnungen und Montagelinien verwendet werden können. Eine Anpassung erfolgt dann ausschließlich durch Änderung des zusätzlich anzubauenden Überwurfflansches mit seinem Schraubenlochmuster, der nicht nur als Druckgussteil, sondern auch als Stanz-, Stanzbiege-, oder Prägeteil kostengünstig hergestellt und mit geringem Aufwand in der Herstellung geändert werden kann. Dennoch wird eine ausreichende Dichtwirkung sichergestellt.

Es sollte deutlich sein, dass die vorliegende Erfindung nicht auf die beschriebenen Ausführungsbeispiele beschränkt ist, sondern verschiedene Änderungen innerhalb des Schutzbereiches des Hauptanspruchs möglich sind. So kann der Anschlussflansch auch mit Durchgangslöchern ausgeführt sein, so dass eine Verschraubung von der Gegenseite erfolgt. Gegebenenfalls kann es auch günstig sein, eine vollflächige Auflage des Überwurfflansches mit einer gleichmäßigen Krafteinleitung zu bewirken, wenn mit ausreichend geringen Toleranzen gearbeitet wird, so dass eine gleichmäßige Verspannung der gewählten Dichtung erfolgt. Selbstverständlich eignet sich diese Anordnung auch für Klappenventile.

## Patentansprüche

1. Anordnung zur Befestigung eines Regelventils an einem Strömungskanalgehäuse (18) eines Verbrennungsmotors mit einem Einsteckgehäuseteil (14), welches in das Strömungskanalgehäuse (18) ragt,
einem Aktorgehäuse (31), in dem ein Aktor (33) angeordnet ist und einer Gehäuseplatte (22), die auf dem Strömungskanalgehäuse (18) aufliegt und von der aus sich zu einer ersten Seite das Einsteckgehäuseteil (14) und zur gegenüberliegenden Seite das Aktorgehäuse (31) erstreckt,
**dadurch gekennzeichnet, dass**
die Gehäuseplatte (22) von einem Überwurfflansch (44) radial umgeben ist, an dem ein Schraubenlochmuster (53) ausgebildet ist, welches einem Anschlussbohrungsmuster des Strömungskanalgehäuses (18) entspricht, wobei das Regelventil über Schrauben (56), die durch Durchgangslöcher (52) des Überwurfflansches (44) gesteckt sind, am Strömungskanalgehäuse (18) befestigt ist, wobei die Gehäuseplatte (22), das Einsteckgehäuseteil (14) und ein sich von der Gehäuseplatte (22) erstreckendes Aktorgehäuseteil (20) ein Leichtmetallgussteil ist, wobei der Umfang des sich von der Gehäuseplatte (22) erstreckenden Aktorgehäuseteils (20) kleiner ist als der Innenumfang des Überwurfflansches (44),
wobei ein zum Strömungskanalgehäuse (18) weisender axialer Abschnitt (46) des Überwurfflansches (44) einen Innenumfang aufweist, der im Wesentlichen dem Außenumfang der Gehäuseplatte (22) entspricht und ein vom Strömungskanalgehäuse (18) weg weisender axialer Abschnitt (48) des Überwurfflansches (44) einen geringeren Innenumfang aufweist als der zum Strömungskanalgehäuse (18) weisende axiale Abschnitt (46), wobei der vom Strömungskanalgehäuse (18) weg weisende axiale Abschnitt (48) axial gegen die Gehäuseplatte (22) anliegt und der zum Strömungskanalgehäuse (18) weisende axiale Abschnitt (46) eine geringere axiale Höhe aufweist als die Gehäuseplatte (22).

2. Anordnung zur Befestigung eines Regelventils an einem Strömungskanalgehäuse (18) eines Verbrennungsmotors nach Anspruch 1,
**dadurch gekennzeichnet, dass**
zwischen dem Strömungskanalgehäuse (18) und der Gehäuseplatte (22) eine Dichtung (58) angeordnet ist, welche durch die Befestigung des Regelventils mittels der durch die Durchgangslöcher (52) des Überwurfflansches (44) gesteckten Schrauben (56) elastisch verformt ist.

3. Anordnung zur Befestigung eines Regelventils an einem Strömungskanalgehäuse (18) eines Verbrennungsmotors nach Anspruch 2,
**dadurch gekennzeichnet, dass**
die Dichtung eine Blechsickendichtung (58) ist.

4. Anordnung zur Befestigung eines Regelventils an einem Strömungskanalgehäuse (18) eines Verbrennungsmotors nach einem der Ansprüche 2 oder 3,
**dadurch gekennzeichnet, dass**
die Durchgangslöcher (52) im Überwurfflansch (44) an Anschraubdomen (50) ausgebildet sind, deren zum Strömungskanalgehäuse (18) weisende axiale Höhe gemessen ab dem axialen Ende der Gehäuseplatte (22) geringfügig kleiner ist als die Summe der axialen Höhe der Gehäuseplatte (22) und der Dichtung (58).

5. Anordnung zur Befestigung eines Regelventils an einem Strömungskanalgehäuse (18) eines Verbrennungsmotors nach Anspruch 4, **dadurch gekennzeichnet, dass**
die axiale Höhe der Anschraubdome (50) größer ist als die axiale Höhe des übrigen Umfangs des Überwurfflansches (44).

6. Anordnung zur Befestigung eines Regelventils an einem Strömungskanalgehäuse (18) eines Verbrennungsmotors nach einem der vorhergehenden Ansprüche,
**dadurch gekennzeichnet, dass**
der Überwurfflansch (44) gegen ein Lösen gesichert an der Gehäuseplatte (22) befestigt ist.

7. Anordnung zur Befestigung eines Regelventils an einem Strömungskanalgehäuse (18) eines Verbrennungsmotors nach einem der vorhergehenden Ansprüche,
**dadurch gekennzeichnet, dass**
der Überwurfflansch (44) ein Druckguss- Stanz- Stanzbiege- oder Prägeteil ist.

8. Anordnung zur Befestigung eines Regelventils an einem Strömungskanalgehäuse (18) eines Verbrennungsmotors nach einem der vorhergehenden Ansprüche,
**dadurch gekennzeichnet, dass**
am Einsteckgehäuseteil (14) ein Einlass (40) und ein Auslass (42) ausgebildet sind, wobei ein Regelkörper (30) einen Durchlass (38) zwischen dem Einlass (40) und dem Auslass (42) beherrscht, der über den Aktor (33) in Bewegung versetzbar ist.

## Claims

1. An arrangement for attaching a control valve to a flow channel housing (18) of an internal combustion engine which comprises
an insertion housing part (14) configured to project into the flow channel housing (18),
an actuator housing (31), in which an actuator (33) is arranged and
a housing plate (22) configured to rest on the flow channel housing (18), and from which plate the insertion housing part (14) extends to a first side and the actuator housing (31) extends to the opposite side;
**characterized in that**
a collar flange (44) radially surrounds the housing plate (22), a screw hole pattern (53) being formed in the flange, the screw hole pattern corresponding to a connecting bore pattern of the flow channel housing (18), the control valve being attached to the flow channel housing (18) via screws (56) being inserted through through-holes (52) of the collar flange (44), wherein each of the housing plate (22), the insertion housing part (14) and the actuator housing part (20) extending from the housing plate (22) are provided as a light-metal casting parts, wherein the circumference of the actuator housing part (20) extending from the housing plate (22) is smaller than the inner circumference of the collar flange (44), wherein an axial section (46) of the collar flange (44) configured to face toward the flow channel housing (18) has an inner circumference that substantially corresponds to the outer circumference of the housing plate (22) and an axial section (48) of the collar flange (44) configured to face away from the flow channel housing (18) comprises an inner circumference smaller than that of the axial section facing to the flow channel housing (18), wherein the axial section (48) configured to face away from the flow channel housing (18) rests axially n the housing plate (22) and the axial section (46) configured to face to the flow channel housing (18) has a lesser axial height than the housing plate (22).

2. The arrangement for attaching a control valve to a flow channel housing (18) of an internal combustion engine of claim 1, **characterized in that** a sealing (58) is arranged between the flow channel housing (18) and the housing plate (22), the sealing being configured to be elastically deformed by the attachment of the control valve via the screws (56) being inserted through the through holes (52) of the collar flange (44).

3. The arrangement for attaching a control valve to a flow channel housing (18) of an internal combustion engine of claim 2, **characterized in that** the sealing is a metal bead sealing (58).

4. The arrangement for attaching a control valve to a flow channel housing (18) of an internal combustion engine of one of claims 2 or 3, **characterized in that** the through holes (52) in the collar flange (44) are formed in screw domes (50) whose axial height oriented toward the flow channel housing (18) as measured from the axial end of the housing plate (22) is slightly less than a sum of the axial height of the housing plate (22) and of the sealing (58).

5. The arrangement for attaching a control valve to a flow channel housing (18) of an internal combustion engine of claim 4, **characterized in that** the axial height of the screw domes (50) is greater than an axial height of a rest of the circumference of the collar flange (44).

6. The arrangement for attaching a control valve to a flow channel housing (18) of an internal combustion engine of one of the preceding claims, **characterized in that** the collar flange (44) is non-detachably fastened to the housing plate (22).

7. The arrangement for attaching a control valve to a flow channel housing (18) of an internal combustion engine of one of the preceding claims, **characterized in that** the collar flange (44) is provided as a pressure-cast part, a punched part, a stamp-bent part, or an embossed part.

8. The arrangement for attaching a control valve to a flow channel housing (18) of an internal combustion engine of one of the preceding claims, **characterized in that** the insertion housing part (14) is formed with an inlet (40) and an outlet (42), wherein a control body (30) is configured to govern a passage (38) between the inlet (40) and the outlet (42), which control body is configured to be moved by the actuator (33).

## Revendications

1. Agencement pour la fixation d'une soupape de commande sur un boîtier de canal d'écoulement (18) d'un moteur à combustion interne avec
une partie de boitier d'enfichage (14), qui saille dans un boitier de canal d'écoulement (18),
un boitier d'actionneur (31), dans lequel un actionneur (33) est disposé et une plaque de boitier (22), qui repose sur le boîtier de canal d'écoulement (18) et à partir duquel s'étend la partie de boîtier d'enfichage (14) vers un premier côté et le boîtier d'actionneur (31) sur le côté opposé,
**caractérisé en ce que**
la plaque de boîtier (22) est entourée radialement par une bride tournante (44), sur laquelle est formée un motif de trous de vis (53), qui correspond à un motif d'alésage de connexion du boitier de canal d'écoulement (18), la soupape de commande étant fixée sur le boitier de canal d'écoulement (18) par l'intermédiaire de vis (56) insérées à travers des trous (52) de la bride tournante (44), la plaque de boitier (22), la partie de boitier d'enfichage (14) et une partie de boitier d'actionneur (20), qui s'étend à partir de la plaque de boitier (22), étant des pièces moulées en métal léger, la circonférence de la partie de boîtier d'actionneur (20), qui s'étend à partir de la plaque de boîtier (22), étant inférieure à la circonférence intérieure de la bride tournante (44),
une section axiale (46) de la bride tournante (44), qui est tourné vers le boitier de canal d'écoulement (18), présentant une circonférence interne, qui correspond sensiblement à la circonférence extérieure de la plaque de boîtier (22), et une section axiale (48) de la bride tournante (44) détournée du boitier de canal d'écoulement (18) présentant une circonférence interne inférieure à celle de la section axiale (46) tournée vers le boitier de canal d'écoulement (18), la section axiale (48) détournée du boitier de canal d'écoulement (18) repose axialement contre la plaque de boitier (22), et la section axiale (46) tournée vers le boitier de canal d'écoulement (18) présentant une hauteur axiale inférieure à la plaque de boitier (22).

2. Agencement pour la fixation d'une soupape de régulation sur un boitier de canal d'écoulement (18) d'un moteur à combustion interne selon la revendication 1, **caractérisé en ce qu'**un joint (58) est disposé entre le boitier de canal d'écoulement (18) et la plaque de boitier (22), le joint, en fixant la soupape de commande au moyen des vis (56) insérées dans les trous traversants (52) de la bride tournante (44), étant déformée élastiquement.

3. Agencement pour la fixation d'une soupape de commande sur un boitier de canal d'écoulement (18) d'un moteur à combustion interne selon la revendication 2, **caractérisé en ce que** le joint est un joint à talon en tôle (58).

4. Agencement pour la fixation d'une soupape de régulation sur un boitier de canal d'écoulement (18) d'un moteur à combustion interne selon l'une quelconque des revendications 2 ou 3, **caractérisé en ce que** les trous traversants (52) dans la bride tournante (44) sont formés dans des bossages pour vis (50), dont la hauteur axiale mesurée à partir de l'extrémité axiale de la plaque de boîtier (22) est légèrement inférieure à la somme de la hauteur axiale de la plaque de boîtier (22) et du joint (58).

5. Agencement pour la fixation d'une soupape de commande sur un boitier de canal d'écoulement (18) d'un moteur à combustion interne selon la revendication 4, **caractérisé en ce que** la hauteur axiale des bossages pour vis (50) est supérieure à la hauteur axiale de la circonférence restante de la bride tournante (44).

6. Agencement pour la fixation d'une soupape de régulation sur un boîtier de canal d'écoulement (18) d'un moteur à combustion interne selon l'une quelconque des revendications précédentes, **caractérisé en ce que** la bride tournante (44) est fixée contre le desserrage sur la plaque de boitier (22).

7. Agencement pour fixer une soupape de régulation à un boitier de canal d'écoulement (18) d'un moteur à combustion interne selon l'une quelconque des revendications précédentes, **caractérisé en ce que** la bride tournante (44) est une pièce moulée sous pression, emboutie, pliée matricée ou estampée.

8. Agencement pour la fixation d'une soupape de commande sur un boitier de canal d'écoulement (18) d'un moteur à combustion interne selon l'une quelconque des revendications précédentes, **caractérisé en ce que** la partie de boitier d'enfichage (14) comprend une entrée (40) et une sortie (42), un corps de commande (30) régulant une passage (38) entre l'entrée (40) et la sortie (42), le corps pouvant être déplacé via l'actionneur (33).
